# EUROPÄISCHE PATENTSCHRIFT

(11) **EP 2 098 570 B1**
(45) Veröffentlichungstag und Bekanntmachung des Hinweises auf die Patenterteilung: **21.05.2014**
(21) Anmeldenummer: 09153852.0
(22) Anmeldetag: 27.02.2009
(51) Int. Cl.: C08L 67/02, C08L 31/04

(54) **Vernetzbare Zusammensetzungen, daraus erhältliche thermoplastische Elastomere und deren Verwendung**
Crosslinkable compositions, thermoplastic elastomers derived from same and use thereof
Compositions réticulées, élastomères thermoplastiques ainsi obtenues et leur utilisation

(30) Priorität: 04.03.2008 DE 102008012516; 18.08.2008 DE 102008038280
(43) Veröffentlichungstag der Anmeldung: 09.09.2009
(73) Patentinhaber: LANXESS Deutschland GmbH, 50569 Köln (DE)
(72) Erfinder: Varnhorn, Kay, 51375, Leverkusen (DE); Mertinkat, Jörg, 83024, Rosenheim (DE)

(56) Entgegenhaltungen:
- DE-A1- 10 017 149
- US-A- 4 322 575

## Beschreibung

Die vorliegende Erfindung betrifft vernetzbare Zusammensetzungen auf der Basis von Copolyestern als thermoplastische Elastomere und α-Olefin-Vinylacetat-Copolymeren mit einem Vinylacetatgehalt von ≥ 40 Gew.-%, wobei die Zusammensetzungen ein Peroxid als Vernetzungsinitiator enthalten. Des Weiteren betrifft die vorliegende Erfindung die Herstellung der erfindungsgemäßen vernetzbaren Zusammensetzungen, die Verwendung der erfindungsgemäßen vernetzbaren Zusammensetzungen zur Herstellung von thermoplastischen Elastomeren, ein Verfahren zur Vernetzung der erfindungsgemäßen Zusammensetzungen unter Erhalt eines erfindungsgemäßen thermoplastischen Elastomers sowie die erfindungsgemäßen thermoplastischen Elastomere selbst und deren Verwendung zur Herstellung von Formteilen.

Klassisch werden in der Kunststofftechnik drei wesentliche Werkstoffklassen unterschieden, nämlich Thermoplaste, Elastomere und Duromere. In den letzten Jahren hat eine weitere Klasse von Werkstoffen, die thermoplastischen Elastomere, immer neue Anwendungen gefunden. Thermoplastische Elastomere kombinieren die Verarbeitungseigenschaften von Thermoplasten mit den Gebrauchseigenschaften von Elastomeren. Dem Fachmann sind verschiedene Klassen (so genannter) thermoplastischer Elastomere bekannt. Dabei kann man zwei Hauptklassen unterscheiden, nämlich Blockcopolymere (auch Multiblockcopolymere) und Elastomerlegierungen.

Die Blockcopolymere sind aus einer harten und einer weichelastischen Phase aufgebaut. Meist bilden die Weichphasen die Matrix und die Hartphasen liegen als disperse Phase vor, die wie ein vernetzender/verstärkender Füllstoff wirkt. Die Vernetzungsbereiche werden durch physikalische Bindungen zwischen den Hartsegmenten gebildet. Die Blockcopolymere verhalten sich innerhalb der Gebrauchstemperaturen wie vernetzte Elastomere, wenn die Umwandlungstemperatur der Hartsegmente deutlich über und die der Weichsegmente deutlich unter der Gebrauchstemperatur liegen und zusätzlich die Mischungsanteile in einem richtigen Verhältnis zueinander stehen.

Elastomerlegierungen sind Polymerblends, die Thermoplast- und Elastomeranteile enthalten. Die Herstellung erfolgt durch intensives Vermischen der Ausgangskomponenten, wobei Vernetzungsmittel zugesetzt werden können. Wird die Weichphase (teilweise) vernetzt, spricht man von TPE-V (thermoplastische Vulkanisate). Liegt die Weichphase unvernetzt vor, spricht man von TPE-O.

Die vorliegende Erfindung betrifft thermoplastische Elastomere vom Typ TPE-V. Dabei wird als Thermoplast mindestens ein Copolyester als thermoplastisches Elastomer eingesetzt.

TPE-V, die Copolyester aufweisen, sind im Stand der Technik bekannt.

EP 1 767 577 A1 betrifft thermoplastische Elastomer-Zusammensetzungen, die 20 bis 95 Gew.-% eines Polyesters (A) mit einer Schmelzflussrate von 4 g/10 min bis < 20 g/10 min und 80 bis 5 Gew.-% mindestens eines Kautschuks (B) ausgewählt aus Acrylkautschuk (B1), hydriertem Nitrilkautschuk (B2) und Polyetherkautschuk (B3) aufweisen, wobei der Kautschuk (B) dynamisch vernetzt ist. Die thermoplastischen Elastomere gemäß EP 1 767 577 A1 sollen sich gemäß EP 1 767 577 A1 durch gute Dehnungseigenschaften, einen niedrigen Druckverformungsrest und überlegene Ermüdungseigenschaften auszeichnen. Aus den Beispielen geht hervor, dass insbesondere die Schmelzflussrate des Polyesters (A) wesentlich ist, um thermoplastische Elastomere, aufgebaut aus den Komponenten gemäß EP 1 767 577 A1 mit vorteilhaften Eigenschaften zu erhalten. Thermoplastische Elastomere, die als Kautschuk-Komponente spezielle α-Olefin-Vinylacetat-Copolymere mit einem Vinylacetat von ≥ 40 Gew.-% enthalten, sind in EP 1 767 577 A1 nicht offenbart.

EP 0 327 010 A2 betrifft thermoplastische Zusammensetzungen, die 20 bis 99 Gewichtsteile eines thermoplastischen Multiblock-Copolyester-Elastomers, das über 100°C schmilzt und 1 bis 80 Gewichtsteile eines Polyacrylat-Elastomers enthalten. Die Zusammensetzungen gemäß EP 0 327 010 A2 sollen weiche, elastomere, thermoplastische Materialien sein, die einen niedrigen Quellungsgrad in Öl und einen niedrigen Druckverformungsrest aufweisen. Thermoplastische Elastomere, die α-Olefin-Vinylacetat-Copolymere mit einem Vinylacetat von ≥ 40 Gew.-% enthalten, sind in EP 0 327 010 A2 nicht offenbart.

DE 44 25 944 A1 betrifft thermoplastische Elastomer-Zusammensetzungen enthaltend (I) 5 bis 60 Gew.-% eines oder mehrerer Thermoplasten, ausgewählt aus der Gruppe bestehend aus Polycarbonat, Polystyrolacrylnitril, Polymethylmethacrylat, Polyoxymethylen, Polybutylenterephthalat, Polyamid und Polyvinylchlorid, und (II) 40 bis 95 Gew.-% eines vernetzten Ethylen-Vinylester-Mischpolymerisats, erhältlich durch Emulsionspolymerisation von Ethylen und Vinylester-Monomeren mit mehrfach ethylenisch ungesättigten Comonomeren und gegebenenfalls nachfolgender Pfropf-Copolymerisation. Der Vorteil der thermoplastischen Elastomer-Zusammensetzungen gemäß DE 44 25 944 A1 liegt gemäß der Offenbarung in DE 44 25 944 A1 darin, dass thermoplastische Elastomere zur Verfügung gestellt werden, die durch thermomechanisches Mischen, ohne zusätzlichen Vernetzungsschritt, bzw. Zerkleinerungsschritt, hergestellt werden, die eine thermomechanisch stabile, gut definierte Elastomer-Phasenstruktur aufweisen und gute mechanische Eigenschaften bei verbesserten elastischen Eigenschaften bei höheren Temperaturen besitzen. Thermoplastische Elastomere, worin α -Olefin-Vinylacetat-Copolymere dynamisch in Anwesenheit des verwendeten Thermoplasten vernetzt werden, sind in DE 44 25 944 A1 nicht erwähnt. Die dynamische Vernetzung soll gemäß DE 44 25 944 A1 gerade vermieden werden.

DE 100 17 149 A1 betrifft thermoplastische Elastomerzusammensetzungen, umfassend (i) 30 bis 90 Gewichtsteile einer thermoplastischen Harzmasse, die mindestens eine Art von thermoplastischen Copolyesterelastomeren enthält, und (ii) 10 bis 70 Gewichtsteile einer Kautschukmasse, die einen einen Ethylenbestandteil enthaltenden Kautschuk enthält. Das thermoplastische Copolyesterelastomer weist ein hartes Segment und ein weiches Segment auf, und das Molverhältnis eines Polyolrests im harten Segment zu einem Polyolrest im weichen Segment 1:1,5 bis weniger als 4,0 beträgt. Die thermoplastischen Elastomerzusammensetzungen gemäß DE 100 17 149 A1 sollen für Gelenkmanschetten mit verbesserter Biegsamkeit, verbessertem Druckverformungsrest und verbesserten Niedertemperatur-Eigenschaften ohne Beeinträchtigung der ausgezeichneten mechanischen Eigenschaften, Wärmebeständigkeit und Ölbeständigkeit einer thermoplastischen Elastomerzusammensetzung geeignet sein. Als einen einen Ethylenbestandteil enthaltenden Kautschuk können die thermoplastischen Elastomerzusammensetzungen einen Ethylen-Propylen-Copolymerkautschuk, Ethylen-Propylen-Dien-Copolymerkautschuk, Ethylen-Acrylsäureester-**Copolymerkautschuk, Ethylen**-Ethylacrylat-Copolymerkautschuk, chlorsulfoniertes Polyethylen, chloriertes Polyethylen oder einen Ethylen-Vinylacetat-Copolymerkautschuk (EVA) enthalten. Die Kautschukmasse kann gemäß DE 100 17 149 A1 unvernetzt oder zumindest teilweise vernetzt sein. In DE 100 17 149 A1 ist ein Beispiel für eine thermoplastische Elastomerzusammensetzung angegeben, die als Kautschukgemisch EVA und ein thermoplastisches Copolyesterelastomer, aufgebaut aus Terephthalsäuredimethylester, 1,4-Butandiol und Polytetramethylenglykol aufweist. Das Kautschukgemisch ist zu einem Anteil von 40 Gewichtsteilen und das thermoplastische Copolyester-Elastomer zu einem Anteil von 60 Gewichtsteilen in der Mischung enthalten. Die Kautschukmischung wurde mit 0,5 Gewichtsteilen (bezogen auf 100 Gewichtsteile der Kautschukmischung) Schwefelpulver vernetzt. Zusammensetzungen, die neben einem Copolyester α-Olefin-Vinylacetat-Copolymere mit einem Vinylacetat-Gehalt von ≥ 40 Gew.-% enthalten, wobei zusätzlich mindestens ein Peroxid als radikalischer Vernetzungsinitiator vorliegt und der Anteil des Copolyesters (thermoplastischen Polymeren) 5 bis 50 Gew.-% beträgt, sind in DE 100 17 149 A1 nicht offenbart.

Aufgabe der vorliegenden Erfindung ist es, gegenüber den im Stand der Technik bekannten thermoplastischen Elastomeren thermoplastische Elastomere bereitzustellen, die sich durch ein gummiähnliches Eigenschaftsprofil auszeichnen. Das bedeutet, dass thermoplastische Elastomere bzw. Zusammensetzungen zur Herstellung von thermoplastischen Elastomeren bereitgestellt werden sollen, die sehr gute Rückstelleigenschaften, einen guten Zugverformungsrest, einen guten Druckverformungsrest, sehr gute Temperatur- und Medienbeständigkeiten und einen niedrigen Härtebereich (Shore Härte A) aufweisen. Die thermoplastischen Elastomere sollen durch beliebige Verarbeitungstechniken wie Extrusion, Spritzguss, aber auch Blasformen verarbeitet werden können.

Bei den bisher bekannten thermoplastischen Elastomeren ist es nicht möglich eine Eigenschaftskombination von niedriger Härte, guten elastischen Eigenschaften, schnellem Rückstellverhalten bei gleichzeitiger Medienbeständigkeit und Temperaturbeständigkeit zu erreichen. Bei den bisher bekannten thermoplastischen Elastomeren ist es entweder möglich, gute elastische Eigenschaften oder gute Temperaturbeständigkeiten zu erreichen, wobei jedoch die Medienbeständigkeiten (insbesondere die Langzeit-Medienbeständigkeiten) verbesserungswürdig sind, oder gute Medienbeständigkeiten zu erreichen, wobei die Temperaturbeständigkeiten verbesserungswürdig sind. Thermoplastische Elastomere, die hohe Temperaturbeständigkeiten und gute Medienbeständigkeiten aufweisen, beispielsweise TPE-A (Polyetheramide), TPE-E (Polyetherester) und TPE-U (TPU, Polyurethane), stehen lediglich für Anwendungen im (hohen) Härtebereich Shore D in einem hohen Preissegment zur Verfügung und weisen moderate elastische Eigenschaften auf. Bisher bekannte Materialen der Klasse der thermoplastischen Elastomere (thermoplastischen Vulkanisate) TPE-V konnten das vorstehend erwähnte Anforderungsprofil bisher noch nicht erfüllen.

Die Aufgabe wird gelöst durch die Bereitstellung von vernetzbaren Zusammensetzungen enthaltend
a) 5 bis 90 Gew.-%, bevorzugt 8 bis 85 Gew.-%, besonders bevorzugt 10 bis 80 Gew.-%, ganz besonders bevorzugt 10 bis 40 Gew.-%, insbesondere ganz besonders bevorzugt 10 bis < 30 Gew.-% mindestens eines Copolyesters als thermoplastisches Elastomer, als Komponente A;
b) 10 bis 95 Gew.-%, bevorzugt 14,5 bis 91,5 Gew.-%, besonders bevorzugt 19,5 bis 89,5 Gew.-%, ganz besonders bevorzugt 40 bis 89,5 Gew.-%, insbesondere ganz besonders bevorzugt > 55 bis 85 Gew.-% mindestens eines α-Olefin-Vinylacetat-Copolymeren, mit einem Vinylacetatgehalt von ≥ 40 Gew.-%, bevorzugt ≥ 50 Gew.-%, als Komponente B;
c) 0 bis 30 Gew.-%, bevorzugt 0,5 bis 28 Gew.-%, besonders bevorzugt 0,5 bis 25 Gew.-%, ganz besonders bevorzugt 0,5 bis 20 Gew.-%, insbesondere ganz besonders bevorzugt 5 bis 15 Gew.-% Füllmaterialien, Weichmacher, Additive und/oder Zusatzstoffe als Komponente C;
   wobei die Summe der Komponenten A, B und C 100 Gew.-% ergibt,
   und
d) 0,1 bis 15 Gewichtsteile pro 100 Gewichtsteile des α-Olefin-Vinylacetat-Copolymers (phr), bevorzugt 0,2 bis 10 phr, besonders bevorzugt 0,5 bis 7 phr mindestens eines Peroxids als radikalischen Vernetzungsinitiator als Komponente D.

Die erfindungsgemäßen Zusammensetzungen sind zur Herstellung von thermoplastischen Elastomeren geeignet, die sich neben einer hervorragenden Temperatur- und Medienbeständigkeit insbesondere durch sehr gute elastische Eigenschaften in einem weiten Härtebereich auszeichnen.

Besonders geeignete erfindungsgemäße Zusammensetzungen weisen z. B. eine Quellung bei 24 h Lagerung in Motoröl von < 15%, keine Änderung der Zug-Dehnungseigenschaften nach Heizluftalterung bei 150°C über 168 h und einen Härtebereich (Shore Härte A) von 60 -90 ShA auf (geeignete Messmethoden sind in den nachstehenden Beispielen genannt).

Dies wird in den Zusammensetzungen insbesondere dadurch erreicht, dass α -Olefin-Vinylacetat-Copolymere mit einem hohen Vinylacetatgehalt von ≥ 40 Gew.-%, bevorzugt ≥ 50 Gew.-% als Komponente B eingesetzt werden, die dynamisch mittels Peroxiden als Vernetzungsinitiatoren vernetzt werden.

Aus den erfindungsgemäßen Zusammensetzungen hergestellte thermoplastische Elastomere können mittels Extrusion, Spritzgießen oder auch mittels Blasformen verarbeitet werden.

### Komponente A: mindestens ein Copolyester als thermoplastisches Elastomer

Das thermoplastische Elastomer wird in den erfindungsgemäßen vernetzbaren Zusammensetzungen in einer Menge von 5 bis 90 Gew.-%, bevorzugt 8 bis 85 Gew.-%, besonders bevorzugt 10 bis 80 Gew.-%, ganz besonders bevorzugt 10 bis 40 Gew.-%, insbesondere ganz besonders bevorzugt 10 bis < 30 Gew.-%, bezogen auf die Summe der Komponenten A, B (mindestens ein α -Olefin-Vinylacetat-Copolymer) und C (Füllmaterialien, Weichmacher, Additive und/oder Zusatzstoffe) eingesetzt.

Als Komponente A geeignete Copolyester sind dem Fachmann bekannt. Geeignete Copolyester sind im Allgemeinen Copolyester in Form von Copolymeren, die Monomer-Bausteine in der Polymer-Hauptkette aufweisen, die über Ester-Gruppen (-C(=O)-O-) verbunden sind.

Copolyester in Form von Copolymeren sind bevorzugt Multiblock-Copolyester, die aus harten Blöcken (X) und weichen Blöcken (Y) aufgebaut sind. Geeignete Monomer-Komponenten zum Aufbau von harten Blöcken (X) und weichen Blöcken (Y) in Multiblock-Copolyestern sind dem Fachmann bekannt und z. B. in Encyclopedia of Polymer Science and Engineering, Vol. 12, Seite 75 ff. (1988) und der darin zitierten Literatur offenbart. In einer bevorzugten Ausführungsform basieren die harten Blöcke (X) des Multiblock-Copolyesters auf aliphatischen Diolen und aromatischen Dicarbonsäuren. Geeignete aliphatische Diole und aromatische Dicarbonsäuren sind dem Fachmann bekannt und bevorzugte aliphatische Diole und aromatische Dicarbonsäuren sind nachstehend genannt.

Die weichen Blöcke (Y) basieren bevorzugt auf
(i) mindestens einem Poly(alkylenoxid)glykol, und/oder
(ii) aliphatischen Diolen und aliphatischen Dicarbonsäuren; und/oder
(iii) einem Triblock-Copolymer enthaltend einen gegebenenfalls hydrierten Polyalkadien-Block und zwei Polyalkylenoxid-Blöcke; und/oder
(iv) einem aliphatischen Carbonat und gegebenenfalls einem aliphatischen Diol und einer aliphatischen Carbonsäure; oder einem Lacton.

Die Blöcke (X) und (Y) sind üblicherweise über difunktionelle Verbindungen gemäß dem Fachmann bekannten Verfahren verknüpft. Anstelle der vorstehend genannten Dicarbonsäuren können alternativ oder im Gemisch damit die entsprechenden Dicarbonsäureester eingesetzt werden.

Zur Herstellung der erfindungsgemäß eingesetzten Copolyester, geeignete Diole sind z.B. Ethylenglykol, Diethylenglykol, Triethylenglykol, Propylenglykol, Butylenglykol, Trimethylenglykol und Cyclohexandimethanol.

Geeignete aromatische Dicarbonsäuren oder Dicarbonsäureestern sind beispielsweise Phthalsäure, Terephthalsäure oder Isophthalsäure, bzw. die entsprechenden Ester davon.

Geeignete aliphatische Dicarbonsäuren bzw. Ester davon sind Fumarsäure, Adipinsäure oder die entsprechenden Ester.

In den weichen Blöcken (Y) gemäß (i) eingesetzte Poly(alkylenoxid)glykole sind z. B. C₂-C₁₀-Poly(alkylenoxid)glykole, bevorzugt Poly(butylenoxid)glykol, Poly(hexamethylenoxid)glykol oder Copolymere der genannten Alkylenoxide, z. B. Copolymere aus Ethylenoxid und Propylenoxid.

Als weiche Blöcke (Y) gemäß (iii) eingesetzte Triblock-Copolymere sind z. B. die in WO 01/04174 offenbarten Triblock-Copolymere.

Geeignete weiche Blöcke (Y) gemäß (iv) sind die in US 5,914,386 genannten weichen Blöcke.

Bevorzugt werden als weiche Blöcke (Y) weiche Blöcke basierend auf mindestens einem Poly(alkylenoxid)glykol eingesetzt. In einer bevorzugten Ausführungsform ist der Polyester daher ein Multiblock-Copolyester, aufgebaut aus harten Blöcken (X), basierend auf aliphatischen Diolen ausgewählt aus der Gruppe bestehend aus Ethylenglykol, Diethylenglykol, Triethylenglykol, Propylenglykol, Butylenglykol, Trimethylenglykol und Cyclohexandimethanol, bevorzugt Butylenglykol, und aromatischen Dicarbonsäuren, bzw. deren Estern, ausgewählt aus der Gruppe bestehend aus Phthalsäure, Terephthalsäure und Isophthalsäure, bevorzugt Terephthalsäure, und weichen Blöcken (Y), basierend auf mindestens einem Poly(alkylenoxid)glykol, wobei das Poly(alkylenoxid)glykol aus C₂-C₁₀-Poly(allcylenoxid)glykolen, **bevorzugt** Poly(ethylenoxid)glykol, Poly(propylenoxid)glykol, **Poly(butyleno** xid)glykol, Poly(hexamethylenoxid)glykol oder Copolymeren der genannten Alkylenoxide, z. B. Copolymeren aus Ethylenoxid und Propylenoxid, aufgebaut ist.

Die erfindungsgemäß bevorzugt eingesetzten Copolyester weisen Schmelzpunkte bzw. Erweichungspunkte von im Allgemeinen 160 bis 300°C, bevorzugt 165 bis 270°C, besonders bevorzugt 170 bis 220°C auf.

Bei der Komponente A in den erfindungsgemäßen vernetzbaren Zusammensetzungen kann es sich um ein einziges thermoplastisches Elastomer oder um eine Mischung von verschiedenen thermoplastischen Elastomeren handeln. Dabei ist es z. B. denkbar, dass verschiedene Copolyester eingesetzt werden. Es ist jedoch auch denkbar, dass z. B. ein Copolyester mit anderen thermoplastischen Elastomeren gemischt wird.

Die als Komponente A in den erfindungsgemäßen Zusammensetzungen geeigneten Copolyester können gemäß dem Fachmann bekannten Verfahren hergestellt werden bzw. sind kommerziell erhältlich. Geeignete kommerziell erhältliche Copolyester sind z.B. die Arnitel^{®}-Typen von Royal DSM oder die Hytrel^{®}-Typen von DuPont.

### Komponente B (α-Olefin-Vinylacetat-Copolymer)

Das α-Olefin-Vinylacetat-Copolymer (Komponente B) wird in den erfindungsgemäßen vernetzbaren Zusammensetzungen in einer Menge von 10 bis 95 Gew.-%, bevorzugt 14,5 bis 91,5 Gew.-%, besonders bevorzugt 19,5 bis 89,5 Gew.-%, ganz besonders bevorzugt 40 bis 89,5 Gew.-%, insbesondere ganz besonders bevorzugt > 55 bis 85 Gew.-% eingesetzt, bezogen auf die Summe der Komponenten A, B und C.

Die als Komponente B eingesetzten α-Olefin-Vinylacetat-Copolymere können im Allgemeinen Vinylacetat-Gehalte von 20 bis 98 Gew.-% aufweisen.

Die erfindungsgemäß bevorzugt eingesetzten α-Olefin-Vinylacetat-Copolymere zeichnen sich durch hohe Vinylacetat-Gehalte von ≥ 40 Gew.-%, bezogen auf das Gesamtgewicht des α -Olefin-Vinylacetat-Copolymeren, bevorzugt durch Vinylacetatgehalte von ≥ 50 Gew.-%, jeweils bezogen auf das Gesamtgewicht der α-Olefin-Vinylacetat-Copolymere, aus. Üblicherweise beträgt der Vinylacetat-Gehalt der erfindungsgemäß eingesetzten α-Olefin-Vinylacetat-Copolymere ≥ 40 Gew.-% bis 98 Gew.-%, bevorzugt ≥ 50 Gew.-% bis 98 Gew.-% und der α-Olefin-Gehalt 2 Gew.-% bis ≤ 60 Gew.-%, bevorzugt 2 Gew.-% bis ≤ 50 Gew.-%, wobei die Gesamtmenge an Vinylacetat und α-Olefin 100 Gew.-% beträgt.

Das erfindungsgemäß eingesetzte α-Olefin-Vinylacetat-Copolymer kann neben den auf dem α -Olefin und Vinylacetat basierenden Monomereinheiten eine oder mehrere weitere Comonomereinheiten aufweisen (z.B. Terpolymere), z.B. basierend auf Vinylestern und/oder (Meth)acrylaten. Die weiteren Comonomereinheiten sind - wenn überhaupt weitere Comonomereinheiten in dem α-Olefin-Vinylacetat-Copolymer vorliegen - in einem Anteil von bis zu 10 Gew.-%, bezogen auf das Gesamtgewicht des α-Olefin-Vinylacetat-Copolymeren vorhanden, wobei sich der Anteil der auf dem α-Olefin basierenden Monomereinheiten auf entsprechend verringert. Somit können z.B. α-Olefin-Vinylacetat-Copolymere eingesetzt werden, die aus ≥ 40 Gew.-% bis 98 Gew.-% Vinylacetat, 2 Gew.-% bis ≤ 60 Gew.-% α-Olefin und 0 bis 10 Gew.-% mindestens eines weiteren Comonomeren aufgebaut sind, wobei die Gesamtmenge an Vinylacetat, α -Olefin und dem weiteren Comonomeren 100 Gew.-% beträgt.

Als α-Olefine können in den erfindungsgemäß eingesetzten α-Olefin-Vinylacetat-Copolymeren alle bekannten α-Olefine eingesetzt werden. Bevorzugt ist das α-Olefin ausgewählt aus Ethen, Propen, Buten, insbesondere n-Buten und i-Buten, Penten, Hexen, insbesondere 1-Hexen, Hepten, insbesondere 1-Hepten, und Octen, insbesondere 1-Octen. Es können auch höhere Homologe der genannten α-Olefine als α-Olefine in den erfindungsgemäß eingesetzten α -Olefin-Vinylacetat-Copolymeren eingesetzt werden. Die α-Olefine können des Weiteren Substituenten tragen, insbesondere C₁-C₅-Alkylreste. Bevorzugt tragen die α-Olefine jedoch keine weiteren Substituenten. Des Weiteren ist es möglich, in den erfindungsgemäß eingesetzten α -Olefin-Vinylacetat-Copolymeren Mischungen zweier oder mehrerer verschiedener α-Olefine einzusetzen. Bevorzugt ist es jedoch, keine Mischungen verschiedener α-Olefine einzusetzen. Bevorzugte α -Olefine sind Ethen und Propen, wobei Ethen besonders bevorzugt als α-Olefin in den erfindungsgemäß eingesetzten α-Olefin-Vinylacetat-Copolymeren eingesetzt wird. Somit handelt es sich bei dem bevorzugt in den erfindungsgemäßen vernetzbaren Zusammensetzungen eingesetzten α-Olefin-Vinylacetat-Copolymer um ein Ethylen-Vinylacetat-Copolymer.

Besonders bevorzugte Ethylen-Vinylacetat-Copolymere weisen einen Vinylacetat-Gehalt von ≥ 40 Gew.-% bis 98 Gew.-%, bevorzugt ≥ 50 Gew.-% bis 98 Gew.-% und einen Ethylen-Gehalt von 2 Gew.-% bis ≤ 60 Gew.-%, bevorzugt 2 Gew.-% bis ≤ 50 Gew.-%, wobei die Gesamtmenge an Vinylacetat und Ethylen 100 Gew.-% beträgt.

Das erfindungsgemäß eingesetzte α-Olefin-Vinylacetat-Copolymer, bevorzugt Ethylen-Vinylacetat-Copolymer, wird bevorzugt nach einem Lösungspolymerisations-Verfahren bei einem Druck von 100 bis 700 bar, bevorzugt bei einem Druck von 100 bis 400 bar, hergestellt. Das Lösungspolymerisations-Verfahren wird bevorzugt bei Temperaturen von 50 bis 150 °C durchgeführt, wobei im Allgemeinen radikalische Initiatoren verwendet werden.

Üblicherweise werden die erfindungsgemäß bevorzugt eingesetzten Ethylen-Vinylacetat-Copolymere mit hohen Vinylacetat-Gehalten als EVM-Copolymere bezeichnet, wobei das "M" in der Bezeichnung das gesättigte Rückgrat der Methylen-Hauptkette des EVMs andeutet.

Geeignete Herstellungsverfahren für die erfindungsgemäß eingesetzten α -Olefin-Vinylacetat-Copolymere sind zum Beispiel in EP-A 0 341 499, EP-A 0 510 478 und DE-A 38 25 450 genannt.

Die erfindungsgemäß bevorzugt eingesetzten α-Olefin-Vinylacetat-Copolymere mit hohen Vinylacetat-Gehalten, die nach dem Lösungspolymerisations-Verfahren bei einem Druck von 100 bis 700 bar hergestellt werden, zeichnen sich insbesondere durch niedrige Verzweigungsgrade und niedrige Viskositäten aus. Des Weiteren weisen die erfindungsgemäß eingesetzten α -Olefin-Vinylacetat-Copolymere eine statistisch gleichmäßige Verteilung ihrer Bausteine (α-Olefin und Vinylacetat) auf.

Die erfindungsgemäß verwendeten α-Olefin-Vinylacetat-Copolymere, bevorzugt Ethylen-Vinylacetat-Copolymere, weisen im Allgemeinen MFI-Werte (g/10 min), gemessen nach ISO 1133 bei 190 °C und einer Last von 21,1 N, von 1 bis 40, bevorzugt 1 bis 10, besonders bevorzugt 2 bis 6.

Die Mooney-Viskositäten gemäß DIN 53 523 ML 1+4 bei 100 °C betragen im Allgemeinen 3 bis 50, bevorzugt 4 bis 35 Mooney-Einheiten.

Besonders bevorzugt werden in den erfindungsgemäßen vernetzbaren Zusammensetzungen Ethylen-Vinylacetat-Copolymere eingesetzt, die zum Beispiel unter den Handelnamen Levapren^{®} oder Levamelt^{®} der Lanxess Deutschland GmbH kommerziell erhältlich sind.

Besonders bevorzugt eingesetzte α-Olefin-Copolymerisate sind die Ethylen-Vinylacetat-Copolymere Levamelt^{®} 400, Levamelt^{®} 450, Levamelt^{®} 452, Levamelt^{®} 456, Levamelt^{®} 500, Levamelt^{®} 600, Levamelt^{®} 700, Levamelt^{®} 800 und Levamelt^{®} 900 mit 60±1,5 Gew.-% Vinylacetat, 70±1,5 Gew.-% Vinylacetat, 80±2 Gew.-% Vinylacetat bzw. 90±2 Gew.-% Vinylacetat, bzw. die entsprechenden Levapren^{®}-Typen.

In den erfindungsgemäßen vernetzbaren Zusammensetzungen kann als Komponente B ein α -Olefin-Vinylacetat-Copolymer eingesetzt werden, es ist jedoch ebenfalls möglich, Mischungen aus zwei oder mehr α-Olefin-Vinylacetat-Copolymeren einzusetzen.

### Komponente C (Füllmaterialien, Weichmacher, Additive und/oder Zusatzstoffe)

Die erfindungsgemäßen vernetzbaren Zusammensetzungen können 0 bis 40 Gew.-%, bevorzugt 0,5 bis 30 Gew.-%, besonders bevorzugt 5 bis 20 Gew.-%, bezogen auf die Summe der Komponenten A, B und C, Füllmaterialien, Weichmacher, Additive und/oder Zusatzstoffe als Komponente C enthalten.

Geeignete Füllmaterialien, Weichmacher, Additive und/oder Zusatzstoffe sind dem Fachmann grundsätzlich bekannt. Beispiele für geeignete Füllmaterialien, Weichmacher, Additive sowie Zusatzstoffe sind im Folgenden genannt:

### Füllmaterialien (Füllstoffe)

Geeignete Füllmaterialien sind z.B. Ruß, Kreide (Calciumcarbonat), Kaolin, Kieselerde, Talkum (Magnesiumsilikat), Aluminiumoxid-Hydrat, Aluminiumsilikat, Calciumcarbonat, Magnesiumcarbonat, Calciumsilikat, Magnesiumsilikat, Bariumsulfat, Zinkcarbonat, Kaolin calciniert (z.B. Polestar^{®} 200 P), Calciumoxid, Magnesiumoxid, Titanoxid, Aluminiumoxid, Zinkoxid, silanisierte Kaoline, silanisiertes Silicat, beschichtete Kreide, behandelte Kaoline, pyrogene Kieselsäure, hydrophobierte pyrogene Kieselsäure (z.B. Aerosil^{®} 972 ), synthetische, amorphe Fällungskieselsäure (Silica), Industrieruß, Graphit, nanoskalige Füllstoffe wie Kohlenstoff-Nanofibrillen, Nanoteilchen in Plättchenform oder nanoskaliges Siliciumdioxid-Hydrate und Mineralien.

### Weichmacher

Geeignete Weichmacher sind z.B. Esterweichmacher, z.B. Phthalsäureester wie Dioctylphthalat, Diisooctylphthalat, Dinonylphthalat, Diisodecylphthalat; aliphatische Ester wie Dioctyladipinsäureester, Dioctylsebacinsäureester; Phosphorsäureester wie Trikresylphosphorsäureester, Diphenylkresylsäureester, Trioctylphosphat; Polyester wie Polyphthalsäureester, Polyadipinsäureester, Polyesterether ( z.B. ADK Cizer RZ-700, ADK Cizer RZ-750) und Trimellitate (z.B. BISOFLEX^{®} T810T).

### Additive und Zusatzstoffe

Geeignete Additive und Zusatzstoffe sind z.B. Verarbeitungshilfsstoffe, Metallseifen, Fettsäuren und Fettsäurenderivate, Faktis (kautschukähnlicher Stoff, der z. B. durch Einwirken von Schwefel oder Schwefelchlorid auf trocknende Öle gewonnen wird; dient zum Strecken von Kautschuk), Alterungs-, UV- oder Ozonschutzmittel wie Ozonschutzwachse, Antioxidantien, z. B. Polycarbodiimide (z.B. Rhenogran®PCD-50), substituierte Phenole, substituierte Bisphenole, Dihydrochinoline, Diphenylamine, Phenyl-Naphthylamine, Paraphenylendiamine, Benzimidazole, Paraffinwachse, mikrokristalline Wachse, Pigmente, Farbstoffe wie Titandioxid, Lithopone, Zinkoxid, Eisenoxid, Ultramarinblau, Chromoxid, Antimonsulfid; Stabilisatoren wie Wärmestabilisatoren, Stabilisatoren gegen Bewitterung; Oxidationsschutzmittel, z. B. p-Dicumyldiphenylamin (z.B. Naugard^{®} 445), styrolisiertes Diphenylamin (z.B. Vulcanox^{®} DDA ), Zink-Salz von Methylmercaptobenzimidazol (z.B. Vulcanox^{®} ZMB2), polymerisiertes 1,2-Dihydro-2,2,4-trimethylchinolin (z.B. Vulcanox^{®} HS ), Thiodiethylen-bis(3,5-di-tert.-butyl-4-hydroxy)hydrocinnamat, Thiodiethylenbis[3-(3,5-di-tert-butyl-4-hydroxyphenyl)propionat] (z.B. Irganox^{®} 1035), Gleitmittel, Entformungsmittel, Antiflammmittel (Flammschutzmittel), Haftvermittler, Markierungsstoffe, Mineralien sowie Kristallisationsbeschleuniger und - verzögerer.

### Komponente D (radikalischer Vernetzungsinitiator)

Die erfindungsgemäßen vernetzbaren Zusammensetzungen enthalten des Weiteren 0,2 bis 10 Gew.-Teile pro 100 Gew.-Teile des α-Olefin-Vinylacetat-Copolymers (Komponente B) (phr), bevorzugt 1 bis 6 phr, besonders bevorzugt 1,5 bis 6 phr mindestens eines Peroxids als radikalischen Vernetzungsinitiator als Komponente D.

Für eine radikalische Vernetzung, die die gewünschten gummielastischen Eigenschaften der aus den erfindungsgemäßen Zusammensetzungen erhältlichen thermoplastischen Elastomere aufbaut, Ethylen-Vinylacetat-Copolymere bevorzugt, die teilweise oder vollständig vernetzt sind.. Erfindungsgemäße thermoplastische Elastomere mit besonders guten Elastomereigenschaften werden somit dann erhalten, wenn Peroxide als radikalische Vernetzungsinitiatoren in den vorstehend genannten Mengen eingesetzt werden.

Als radikalische Vernetzungsinitiatoren geeignete Peroxide sind dem Fachmann bekannt. Beispiele sind organische Peroxide, z.B. Alkyl- und Arylperoxide, Alkyl-Persäureester, Aryl-Persäureester, Diacyl-peroxide, polyvalente Peroxide wie 2,5-Dimethyl-2,5-di(tert-butylperoxy)hexin-3, (z.B. Trigonox^{®} 145-E85, Trigonox^{®} 145-45B), Di-tert-butyl peroxid (z.B. Trigonox^{®} B), 2,5-Dimethyl-2,5-di(tert-butylperoxy)hexin (z.B. Trigonox^{®} 101), tert-Butyl cumyl peroxid (z.B. Trigonox^{®} T), Di(tert-butylperoxyisopropyl)benzol (z.B. Perkadox^{®} 14-40), Dicumyl peroxid (z.B. Perkado^{®} BC 40), Benzoylperoxid, 2,2'-Bis(tert.-butylperoxy)diisopropylbenzol (z.B. Vulcup^{®}40 AE), 2,3,5-Trimethyl-2,5-di(benzoylperoxy)hexan und (2,5-Bis(tert.-butylperoxy)2,5-dimethylhexan, 3,3,5,7,7-Pentamethyl-1,2,4-trioxepan (z.B. Trigonox^{®} 311).

Eine wichtige Eigenschaft radikalischer Vernetzungsinitiatoren, besonders vernetzender Peroxide ist die Bildung freier Radikale, die allgemein durch die Halbwertszeit [t 1/2] beschrieben wird. Die Halbwertszeit ist die Zeit bei der noch 50% der ursprünglichen Konzentration eines radikalischen Vernetzungsinitiators bei einer bestimmten Temperatur vorhanden sind.

Die Halbwertszeiten werden über die Vulkanisationskurven bestimmt. Mit steigender Temperatur verkürzt sich die Halbwertszeit. Bevorzugt werden solche Peroxide eingesetzt, die oberhalb der Schmelz- bzw. Erweichungstemperatur der Komponente A eine ausreichend lange Halbswertszeit haben, um noch homogen in die Polymerschmelze eingemischt werden zu können. Bevorzugt werden solche Peroxide eingesetzt, deren Halbwertszeit unter der Verweilzeit im entsprechenden Mischagrregat liegen, damit die gebildeten Radikale vollständig für die Vernetzung verbraucht werden können.

Aufgrund der hohen Schmelz- bzw. Erweichungstemperatur des erfindungsgemäß als Komponente A eingesetzten Polyamids erfolgt die Vernetzung der Elastomerphase zur Herstellung der aus den erfindungsgemäßen Zusammensetzungen erhältlichen thermoplastischen Elastomere in einer entsprechend heißen Schmelze. Dies erfordert - in einer bevorzugten Ausführungsform - den Einsatz von radikalischen Vernetzungsinitiatoren, bevorzugt Peroxiden, mit ausreichend langen Halbswertszeit. Radikalische Vernetzungsinitiatoren, bevorzugt Peroxide, mit kurzen Halbwertszeiten bei geringen Temperaturen zerfallen bereits bei erstem Kontakt mit der Polymerschmelze und werden nicht homogen eingemischt und vernetzen die Elastomerphase nicht ausreichend oder inhomogen. Besonders bevorzugt werden daher erfindungsgemäß radikalische Vernetzungsinitiatoren, bevorzugt Peroxide, eingesetzt, die ausreichend lange Halbswertzeiten bei ≥ 175°C, besonders bevorzugt ≥ 180°C, ganz besonders bevorzugt ≥ 185°C, insbesondere ganz besonders bevorzugt ≥ 190°C und weiter ganz besonders bevorzugt ≥ 200°C aufweisen. Besonders bevorzugt wird in den erfindungsgemäßen vernetzbaren Zusammensetzungen 3,3,5,7,7-Pentamethyl-1,2,4-trioxepan das z. B. unter dem Handelsnamen Trigonox® 311 kommerziell erhältlich ist, eingesetzt.

### Komponente E (Covernetzer)

In einer bevorzugten Ausführungsform enthalten die erfindungsgemäßen Zusammensetzungen des Weiteren zusätzlich mindestens einen Covernetzer als Komponente E. Der Covernetzer wird in den erfindungsgemäßen Zusammensetzungen in einer Menge von im Allgemeinen 0 bis 10 Gew.-Teilen pro 100 Gew.-Teile des α-Olefin-Vinylacetat-Copolymers (phr), bevorzugt 1 bis 6 phr, eingesetzt.

Es wurde überraschenderweise gefunden, dass die elastischen Eigenschaften, insbesondere der Druckverformungsrest, von thermoplastischen Elastomeren, die aus den erfindungsgemäßen vernetzbaren Zusammensetzungen hergestellt werden, durch die Zugabe eines Covernetzers in den vernetzbaren Zusammensetzungen verbessert werden können, ohne Beeinträchtigung der vorstehend erwähnten elastischen Eigenschaften und der Temperatur- und Medienbeständigkeiten. Insbesondere der Druckverformungsrest kann durch die Zugabe eines Covernetzers in den erfindungsgemäßen vernetzbaren Zusammensetzungen in dem technisch relevanten Bereich wesentlich verbessert werden. Dem Stand der Technik ist kein Hinweis zu entnehmen, dass durch den Einsatz eines Covernetzers in vernetzbaren Zusammensetzungen gemäß der vorliegenden Erfindung eine Verbesserung der elastischen Eigenschaften, insbesondere des Druckverformungsrestes, erzielt werden kann. Des Weiteren ist es möglich, durch Zugabe eines Covernetzers, die Vernetzermenge gegenüber der üblicherweise eingesetzten Vernetzermenge zu verringern, ohne das Eigenschaftsprofil der erhaltenen Produkte zu beeinträchtigen.

Geeignete Covernetzer sind zum Beispiel ausgewählt aus der Gruppe bestehend aus Triallylisocyanurat (TAIC) (z.B. DIAK7 von DuPont), N,N'-m-Phenylendimaleimid (z.B. HVA-2^{®} von DuPont Dow), Triallylcyanurat (TAC), flüssiges Polybutadien (z.B. Ricon^{®} D153 von Ricon Resins), Trimethylolpropan-N,N'-m-phenylenmaleimid, N-Methyl-N,N'-m-phenylendimaleimid, Divinylbenzol, polyfunktionellen Methacrylatmonomeren wie Ethylenglykoldimethacrylat, Diethylenglykoldimethacrylat, Polyethylenglykoldimethacrylat, Trimethylolpropantrimethacrylat und Allylmethacrylat, und polyfunktionellen Vinylmonomeren wie Vinylbutyrat und Vinylstearat.

Bevorzugt eingesetzte Covernetzer sind ausgewählt aus der Gruppe bestehend aus Triallylisocyanurat (TAIC), N,N'-m-Phenylendimaleimid, Triallylcyanurat (TAC) und flüssigem Polybutadien. Besonders bevorzugt wird Triallylisocyanurat (TAIC) als Covernetzer eingesetzt.

Es ist möglich, in den erfindungsgemäßen vernetzbaren Zusammensetzungen einen Covernetzer oder zwei oder mehr Covernetzer gemeinsam einzusetzen.

### Komponente F (Verträglichkeitsvermittler)

Neben den vorstehend genannten Komponenten A bis E, wovon einige optional sind, können die erfindungsgemäßen vernetzbaren Zusammensetzungen zusätzlich mindestens einen Verträglichkeitsvermittler als Komponente F enthalten. Der Verträglichkeitsvermittler verbessert im Allgemeinen die Anbindung des α-Olefin-Vinylacetat-Copolymeren (Komponente B) an das thermoplastische Polymer (Komponente A). Geeignete Verträglichkeitsvermittler sind dem Fachmann grundsätzlich bekannt. Beispielsweise sind funktionalisierte Polyolefine bzw. Polyolefin-Copolymere als Verträglichkeitsvermittler geeignet. Geeignete funktionelle Gruppen der funktionalisierten Polyolefine oder Polyolefin-Copolymere sind Carboxylgruppen, Carbonylgruppen, Halogenatome, Aminogruppen, Hydroxygruppen oder Oxazolingruppen. Bevorzugt sind die Polyolefine bzw. Polyolefin-Copolymere mit Carboxylgruppen funktionalisiert. Herstellungsverfahren für geeignete mit Carboxylgruppen funktionalisierte Polyolefine sind zum Beispiel in DE 41 23 963 und der darin genannten Literatur offenbart.

Bevorzugt ist der Verträglichkeitsvermittler in den Zusammensetzungen gemäß der vorliegenden Erfindung ein Copolymer auf Basis eines α-Olefin-Vinylacetat-Copolymeren als Polymerrückrad, das mit Carboxylgruppen, Carbonylgruppen, Halogenatomen, Aminogruppen, Hydroxygruppen oder Oxazolingruppen, bevorzugt mit Carboxylgruppen, funktionalisiert ist. Besonders bevorzugt wird ein Verträglichkeitsvermittler in den erfindungsgemäßen Zusammensetzungen eingesetzt, der mittels Pfropfung von α,β-ethylenisch ungesättigten Mono- und/oder Dicarbonsäuren oder deren Derivaten auf ein α -Olefin-Vinylacetat-Copolymerrückrad erhalten wird. Geeignete Verfahren zur Herstellung des besonders bevorzugten Verträglichkeitsvermittlers sind dem Fachmann bekannt und zum Beispiel in EP 1 801 162 A1 genannt. Die erfindungsgemäßen Zusammensetzungen weisen insbesondere dann ein besonders gutes Ölquellungsverhalten auf, wenn α -Olefin-Vinylacetat-Copolymere, insbesondere Ethylen-Vinylacetat-Copolymere, besonders bevorzugt EVM, mit hohen Vinylacetat-Gehalten von im Allgemeinen ≥ 60 Gew.-% gepfropft werden.

Der vorstehend erwähnte Verträglichkeitsvermittler wird in den erfindungsgemäßen vernetzbaren Zusammensetzungen, wenn er überhaupt vorliegt, in einer Menge von 0 bis 50 Gew.-%, bezogen auf die Gesamtmenge der Komponenten A, B und C, bevorzugt 3 bis 40 Gew.-%, besonders bevorzugt 5 bis 30 Gew.-% eingesetzt .

### Herstellung der erfindungsgemäßen vernetzbaren Zusammensetzungen und Vernetzung zu thermoplastischen Elastomeren (TPE-V)

Die erfindungsgemäßen vernetzbaren Zusammensetzungen können durch Mischen der Komponenten A, B, C, D, E und F - soweit sie in den Zusammensetzungen vorliegen - hergestellt werden. Die Mischung kann dabei unter Verwendung von in der Kautschuktechnologie bekannten Mischsystemen wie Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 Wellenschnecken, erfolgen.

Bei der Durchführung des erfindungsgemäßen Verfahrens ist es wichtig, darauf zu achten, dass die Mischungstemperatur so hoch ist, dass die Komponente A unbeschadet in den plastischen Zustand überführt wird. Dies wird gewährleistet, wenn eine Temperatur oberhalb der höchsten Schmelz-oder Erweichungstemperatur der Komponente A gewählt wird. Besonders bevorzugt wird die Mischung der Komponenten A, B, C, D, E und F - soweit sie in den Zusammensetzungen vorliegen - bei einer Temperatur im Bereich von im Allgemeinen 150 bis 350 °C, bevorzugt 150 bis 280 °C vorgenommen.

Grundsätzlich sind verschiedene Varianten zur Mischung der einzelnen Komponenten möglich.

In einer ersten Variante werden die Komponenten A und B sowie gegebenenfalls die Komponenten C und F, soweit sie in den erfindungsgemäßen Zusammensetzungen vorliegen, vorgelegt und bei Temperaturen oberhalb der höchsten Schmelz- oder Erweichungstemperatur der Komponente A innig vermischt. Anschließend werden die Komponenten D und E (soweit die Komponente E in den erfindungsgemäßen Zusammensetzungen vorliegt) unter Fortsetzung des Mischens und unter Beibehalt der vorgenannten Mischungstemperatur hinzugefügt.

In einer zweiten Ausführungsform des erfindungsgemäßen Verfahrens wird die Komponente B vorgelegt und auf eine Temperatur bis knapp unterhalb der Schmelz- oder Erweichungstemperatur der Komponente A erhitzt. Anschließend wird die Komponente A zugegeben, die Temperatur auf eine Temperatur oberhalb der höchsten Schmelz- oder Erweichungstemperatur der Komponente A erhöht, und erst nachdem die Komponenten B und A, gegebenenfalls gemeinsam mit den Komponenten C und F, falls diese Komponenten vorliegen, innig vermischt sind, die Komponenten D und gegebenenfalls E (falls Komponente E vorliegt) unter Fortsetzung des Mischens und unter Beibehalt der Mischungstemperatur oberhalb der höchsten Schmelz- oder Erweichungstemperatur der Komponente A hinzugefügt.

In einer dritten Variante wird die Komponente A vorgelegt und auf eine Temperatur oberhalb der höchsten Schmelz- oder Erweichungstemperatur von Komponente A erhitzt, dann wird Komponente B hinzugefügt und die Komponenten A und B werden innig, gegebenenfalls gemeinsam mit den Komponenten C und F, falls diese vorliegen, innig vermischt. Im Anschluss werden die Komponenten D und gegebenenfalls E (falls Komponente E vorliegt) unter Fortsetzung des Mischens und unter Beibehalt der Mischungstemperatur oberhalb der höchsten Schmelz- oder Erweichungstemperatur der Komponente A hinzugefügt.

In einer vierten Variante können alle Komponenten A, B, C, D, E und gegebenenfalls F - soweit die Komponenten in den Zusammensetzungen vorliegen - gleichzeitig bei einer Temperatur oberhalb der höchsten Schmelz- oder Erweichungstemperatur des oder der thermoplastischen Polymere vorgelegt und anschließend innig gemischt werden.

Eine besonders gute Verteilung der Elastomer-Komponente B in der thermoplastischen Komponente A wird dann erreicht, wenn das Verfahren gemäß einer fünften, besonders bevorzugten Variante durchgeführt wird. Darin wird zunächst die Komponente B mit den Komponenten D und gegebenenfalls E (soweit Komponente E vorliegt) bei einer Temperatur unterhalb der höchsten Schmelz- oder Erweichungstemperatur der Komponente A gemischt. Die Temperatur unterhalb der höchsten Schmelz- oder Erweichungstemperatur der Komponente A ist abhängig von der eingesetzten Komponente A. Bevorzugt beträgt die Temperatur unterhalb der höchsten Schmelz- oder Erweichungstemperatur der Komponente A 30 bis 180 °C, besonders bevorzugt 50 bis 150 °C. Die erhaltene Mischung wird anschließend zu einer Mischung der Komponente A mit den Komponenten C und F - soweit die Komponenten C und F in den erfindungsgemäßen Zusammensetzungen vorliegen - die auf eine Temperatur oberhalb der höchsten Schmelz- oder Erweichungstemperatur der Komponente A erhitzt wurden, zugemischt. Anschließend werden alle Komponenten bei einer Temperatur oberhalb der höchsten Schmelz-oder Erweichungstemperatur der Komponente A innig vermischt.

Durch die vorstehend genannten Verfahrensvarianten, insbesondere durch die Verfahrensvariante 5, wird erreicht, dass die Komponente A und die Komponente B vor einer Vernetzung der Elastomerphase eine möglichst feine und gleichmäßige Verteilung erfahren. Typisch ist eine Teilchengröße der Elastomerteilchen vor der Vernetzung von < 5 µm.

Die vorstehend und nachstehend erwähnte Temperatur oberhalb der höchsten Schmelz- oder Erweichungstemperatur der Komponente A ist abhängig von der eingesetzten Komponente A. Bevorzugt ist die Temperatur oberhalb der höchsten Schmelz- oder Erweichungstemperatur der Komponente A 150 °C bis 350 °C, besonders bevorzugt 200 °C bis 300 °C.

Die Zugabezeit, Temperatur, Form und Menge der Komponenten D und E sollte darüber hinaus so gewählt sein, dass eine gute Verteilung der Komponenten D und gegebenenfalls E in der Elastomerphase gewährleistet ist, die Elastomer- und Thermoplastphase in dem oben beschriebenen Zustand vorliegen und erst dann die Vernetzung der Elastomerphase erfolgt, so dass eine Phasenumkehr erfolgt oder eine co-kontinuierliche Phasenstruktur der Elastomeren und der Thermoplastphase erfolgt, bzw. das Elastomer in der Thermoplastphase mit Teilchen < 5 µm dispergiert vorliegt.

Die erfindungsgemäßen vernetzbaren Zusammensetzungen eignen sich hervorragend zur Bereitstellung thermoplastischer Elastomere mit ausgewogenen Eigenschaften, insbesondere mit sehr guten Temperatur- und Medienbeständigkeiten bei gleichzeitig sehr guten elastischen Eigenschaften in einem weiten Härtebereich.

Ein weiterer Gegenstand der vorliegenden Erfindung ist daher ein Verfahren zur Herstellung von thermoplastischen Elastomeren umfassend die Vernetzung der erfindungsgemäßen Zusammensetzungen oder von Zusammensetzungen hergestellt gemäß dem erfindungsgemäßen Verfahren. Dazu unterwirft man die erfindungsgemäßen vernetzbaren Zusammensetzungen einem fortgesetzten Mischungsvorgang bei einer Temperatur, welche oberhalb der höchsten Schmelz-oder Erweichungstemperatur der eingesetzten Komponente A liegt. Bevorzugte Temperaturen oberhalb der Schmelz- oder Erweichungstemperatur der Komponente A sind vorstehend genannt.

Gemäß der vorliegenden Erfindung erfolgt eine dynamische Vernetzung. Die Vernetzung der dispersen Elastomerphase erfolgt somit während der Mischung der Komponenten A bis F (soweit diese in der Mischung vorliegen). Diese setzt ein, wenn das erfindungsgemäße Verfahren zur Herstellung der erfindungsgemäßen vernetzbaren Zusammensetzungen, insbesondere ein Verfahren gemäß den Verfahrensvarianten 1 bis 5, besonders bevorzugt während der Verfahrensvariante 5, bei einer Temperatur oberhalb der Schmelz- oder Erweichungstemperatur der Komponente A in Anwesenheit der Komponenten D und gegebenenfalls E fortgeführt wird.

Bei dem Mischvorgang der Komponenten A, B, C, D, E und F - soweit diese Komponenten vorliegen - zur Herstellung der erfindungsgemäßen vernetzbaren Zusammensetzung wird ein Verfahrenspunkt erreicht, in dem die Leistungsaufnahme im Mischaggregat einen konstanten Wert annimmt. Der Mischvorgang zur Herstellung der vernetzbaren Zusammensetzung ist zu diesem Zeitpunkt abgeschlossen, und die vernetzbare Zusammensetzung liegt vor. Bei Bedarf kann der Mischvorgang an dieser Stelle beendet werden und die vernetzbaren Zusammensetzungen können durch Abschrecken, d. h. durch Absenken der Temperatur, erhalten werden, und - falls erwünscht - isoliert werden. Bei einer Fortsetzung des Mischungsvorgangs, ob unmittelbar oder nach Unterbrechung wie beschrieben, findet die Vernetzung durch die Komponenten D und gegebenenfalls E statt, die dadurch zu erkennen ist, dass eine Steigerung der Leistungsaufnahme des Mischaggregats erfolgt. Es handelt sich hierbei um eine dynamische Vernetzung der elastomeren Komponente B.

Nach erfolgter Phasenumkehr bzw. Ausbildung einer co-kontinuierlichen Phase wird das erhaltene vernetzte Produkt, d. h. das thermoplastische Elastomer, im Allgemeinen auf eine Temperatur unterhalb der Schmelz- oder Erweichungstemperatur des oder der thermoplastischen Polymere abgekühlt.

Ein weiterer Gegenstand der vorliegenden Erfindung sind thermoplastische Elastomere, die durch Vernetzung der erfindungsgemäßen vernetzbaren Zusammensetzungen erhältlich sind. Geeignete Vernetzungsverfahren zur Herstellung der erfindungsgemäßen Elastomere sowie geeignete vernetzbare Zusammensetzungen sind vorstehend genannt.

Ein weiterer Gegenstand der vorliegenden Erfindung betrifft thermoplastische Elastomere enthaltend
a) 5 bis 90 Gew.-%, bevorzugt 8 bis 85 Gew.-%, besonders bevorzugt 10 bis 80 Gew.-%, ganz besonders bevorzugt 10 bis 40 Gew.-%, insbesondere ganz besonders bevorzugt 10 bis < 30 Gew.-% mindestens eines Copolyesters als thermoplastisches Elastomer, als Komponente A';
b) 10 bis 95 Gew.-%, bevorzugt 14,5 bis 91,5 Gew.-%, besonders bevorzugt 19,5 bis 89,5 Gew.-%, ganz besonders bevorzugt 40 bis 89,5 Gew.-%, insbesondere ganz besonders bevorzugt > 55 bis 85 Gew.-% mindestens eines α-Olefin-Vinylacetat-Copolymeren, mit einem Vinylacetatgehalt von ≥ 40 Gew.-%, bevorzugt ≥ 50 Gew.-%, das durch mindestens ein Peroxid als radikalischen Vernetzungsinitiator vernetzt ist, als Komponente B';
c) 0 bis 30 Gew.-%, bevorzugt 0,5 bis 28 Gew.-%, besonders bevorzugt 0,5 bis 25 Gew.-%, ganz besonders bevorzugt 0,5 bis 20 Gew.-%, insbesondere ganz besonders bevorzugt 5 bis 15 Gew.-% Füllmaterialien, Weichmacher, Additive und/oder Zusatzstoffe als Komponente C;
   wobei die Summe der Komponenten A, B und C 100 Gew.-% ergibt.

Die thermoplastischen Elastomere gemäß der vorliegenden Erfindung zeichnen sich dadurch aus, dass die Elastomerkomponente B in fein verteilter Form in der thermoplastischen Komponente A vorliegt. Die thermoplastischen Elastomere gemäß der vorliegenden Erfindung zeichnen sich durch eine sehr gute Temperatur- und Medienbeständigkeit bei gleichzeitig sehr guten elastischen Eigenschaften in einem niedrigen Härtebereich (Shore Härte A) aus. Sie verfügen auch bei hohen Temperaturen von deutlich mehr als 150 °C, die vor allem im Automobilbau gefordert werden, über exzellente physikalische und dynamische Eigenschaften, beispielsweise einen hervorragenden Druckverformungsrest. Erst nach Aufschmelzen der Thermoplastphase wird das gesamte System thermoplastisch verarbeitbar und erfüllt damit die notwendigen Voraussetzungen für ein thermoplastisches Elastomer.

Ein weiterer Gegenstand der vorliegenden Erfindung ist somit die Verwendung der erfindungsgemäßen Zusammensetzungen zur Herstellung von thermoplastischen Elastomeren sowie die Verwendung der erfindungsgemäßen thermoplastischen Elastomere zur Herstellung von Formteilen, bevorzugt Riemen, Dichtungen, Manschetten, Schläuchen, Membran, Dämpfern, Profilen, oder Kabelummantelungen, Schmelzklebstoffen, Folien oder zur Kunststoff-Kautschuk-Coextrusion, oder zum Co-Formteil-Spritzen.

Des Weiteren betrifft die vorliegende Erfindung Formteile, Kabelummantelungen, Schmelzklebstoffe oder Folien enthaltend die erfindungsgemäßen thermoplastischen Elastomere.

Geeignete Komponenten der erfindungsgemäßen vernetzbaren Zusammensetzungen und der erfindungsgemäßen thermoplastischen Elastomere sowie geeignete Herstellungsverfahren zur Herstellung der erfindungsgemäßen vernetzbaren Zusammensetzungen sowie zur Herstellung der erfindungsgemäßen thermoplastischen Elastomere sind vorstehend genannt.

Die erhaltenen Formteile zeichnen sich durch hervorragende physikalische Eigenschaften, insbesondere hervorragende Elastizitäten in einem weiten, insbesondere in einem niedrigen, Härtebereich, sowie Hochtemperaturbeständigkeit und Medienbeständigkeit, insbesondere Ölbeständigkeit, aus. Diese Eigenschaften sind insbesondere für Schläuche, Riemen, Membranen, Dichtungen, Bälge, Kabelummantelung, Schmelzklebstoffe, Folien sowie Manschetten beispielsweise für die Automobil- und andere Industrieanwendungen von großer Bedeutung. Die Formteile können z.B. auf einfache Weise in einem Einstufenprozess hergestellt werden.

Die nachfolgenden Beispiele erläutern die Erfindung zusätzlich.

### Beispiele

### Allgemeine Verfahrensvorschrift zur Herstellung der thermoplastischen Elastomere

Ein Innenmischer mit 1,5 1 Mischvolumen der Firma Werner und Pfleiderer wird auf eine Kammertemperatur von 180°C vorgeheizt. Der Kautschuk (Ethylen-Vinylacetat-Copolymer) und alle Additive inklusive Covernetzer - soweit ein Covernetzer eingesetzt wird - jedoch außer des Vernetzungssystems, Peroxid, wird vorgelegt und für 1 min im Innenmischer bei einer Drehzahl von 100 upm gemischt. Der gemäß den folgenden Beispielen eingesetzte Thermoplast mit einem Schmelzpunkt von 210°C - 220°C wird jetzt in den Innenmischer gegeben. Bei einer Drehzahl von 130-150 upm steigt die Temperatur im Innenmischen innerhalb von 2 min auf eine Temperatur von 230°C bis 250°C an. Diese Temperatur liegt über der Temperatur des Schmelzpunkts des Thermoplasten. Der Thermoplast wird vollständig aufgeschmolzen. Durch weiteres Mischen vom 3 min bei dieser Temperatur werden die Komponenten Kautschuk und Thermoplast in der Schmelze innig vermischt. In diesem Mischabschnitt wird die gewünschte Teilchengröße von < 5 µm, eine homogene Verteilung der beiden Komponenten und eine co-continuierliche Phasenmorphologie erreicht. Nach Abschluss der 3 min erfolgt die Zugabe des Vernetzungssystems. Bei geeigneten Peroxiden mit hoher Vernetzungstemperatur entweder direkt oder alternativ in einem Vorcompound, indem das Peroxid in einer kleinen Menge des Kautschuks vor Zugabe in den Innenmischer auf einer Walze vorgemischt wird. Während der Mischzeit von 3 min bei einer Temperatur von 230°C bis 250°C und einer Drehzahl von 150 upm findet die dynamische Vernetzung der Kautschukphase im Innenmischer statt. Der Inhalt des Innenmischers wird ausgeworfen und noch heiß möglichst schnell auf einer Walze zu einem Fell ausgewalzt. Anschließend werden hieraus Prüfplatten ausgeschnitten, die bei Temperaturen von 250°C oberhalb des Schmelzpunkts des TPEs von 220°C für 10 min gepresst werden. Die Prüfplatten haben eine Stärke von 2 mm oder 6 mm abhängig von den nachfolgenden Prüfungen. Alle nachfolgenden Prüfungen werden an diesen Platten durchgeführt. Dehnung und Spannung werden an 2 mm Platten und der Compression Set an 6 mm Platten geprüft.

Die in den Beispielen eingesetzten Komponenten Thermoplast, Kautschuk, Additive und Covernetzer sind in der nachstehenden Tabelle genannt. Die eingesetzten Mengen sind in der nachstehenden Tabelle in Gew.-Teilen angegeben, soweit nichts anderes erwähnt ist.

In Tabelle 1 sind die physikalischen Eigenschaften von fünf erfindungsgemäßen thermoplastischen Elastomeren zusammengefasst:

**Tabelle 1**

| Rezeptur (Gew.- Teile) | | Bsp.1 | Bsp. 2 | Bsp. 3 | Bsp. 4 | Bsp. 5 |
|---|---|---|---|---|---|---|
| EVM-Kautschuk | Levapren 600¹⁾ | 100 | 100 | 100 | 90 | 90 |
| Verträglichkeits- vermittler | MAH_g_Lev 600²⁾ | | | | 10 | 10 |
| COPE 1³⁾ | Arnitel^{®}C³⁾ | | | | 40 (27 Gew.-%) | 40 (27 Gew.-%) |
| COPE 2⁴⁾ | Arnitel^{®}EM 550⁴⁾ | 40 (27 Gew.-%) | 50 (32 Gew.-%) | 50 (32 Gew.-%) | | |
| Peroxid | Trigonox^{®}311⁵⁾ | 2 | 2 | 2 | 1 | 1 |
| Covernetzer | TAIC⁶⁾ | | | 1 | | 0,5 |
| Additive | Maglite^{®}DE⁷⁾ | 2 | 2 | 2 | 2 | 2 |
| | Rhenogran^{®}PCD 50⁸⁾ | 3 | 3 | 3 | 3 | 3 |
| Eigenschaften | Dehnung (%) (ISO 37) | 638 | 692 | 370 | 473 | 398 |
| | Spannung (MPa) (ISO 37) | 4 | 4 | 3,7 | 3,3 | 5 |
| | Härte Shore A (DIN 53505, ISO 868) | 57 | 66 | 64 | 61 | 64 |
| | Compression Set (125°C, 24h, 25%) (ISO 815) | 77 | 81 | 66 | 75 | 60 |
| | Compression Set (150°C, 24h, 25%) (ISO 815) | 72 | 84 | 71 | 82 | 68 |

| | | | | | | |
|---|---|---|---|---|---|---|
| ¹⁾ Levapren^{®} 600: Ethylen-Vinylacetat-Copolymer mit 60 ± 1,5 Gew.-% Vinylacetat der Lanxess Deutschland GmbH ²⁾ MAH_g_Lev 600: Levapren^{®} 600, gepfropft mit Maleinsäureanhydrid; die Herstellung erfolgt in Analogie zu Beispiel 1 (Verfahrensschritt 1 in EP 1 801 162 A1) ³⁾ COPE 1: Copolyester 1, Arnitel^{®}C; TPE-E von Royal DSM ⁴⁾ COPE 2: Copolyester 2, Arnitel^{®}EM 550; TPE-E von Royal DSM ⁵⁾ Trigonox^{®} 311: 3,3,5,7,7-Pentamethyl-1,2,4-trioxepan der Akzo Nobel Chemicals ⁶⁾ TAIC: Triallylisocyanurat; DIAK 7 von DuPont ⁷⁾ Maglite^{®} DE: Magnesiumoxid von CP Hall Co ⁸⁾ Rhenogran PCD 50: Polycarbodiimid der Rhein Chemie Rheinau GmbH | | | | | | |

Aus den in Tabelle 1 dargestellten Ergebnissen geht hervor, dass alle erfindungsgemäßen thermoplastischen Elastomere das gewünschte Eigenschaftsprofil erfüllen. Bei einem Vergleich der erfindungsgemäßen Beispiele 1 und 2 zeigt sich, dass der Druckverformungsrest (Compression Set) und die Härte (Shore A) in den erfindungsgemäßen thermoplastischen Elastomeren gemäß Besipiel 1, worin der Anteil des Copolyesters weniger als 30 Gew.-% beträgt, geringer sind als in den thermoplastischen Elastomeren gemäß Beispiel 2.

Bei einem Vergleich der erfindungsgemäßen Beispiele 2 und 3 sowie bei einem Vergleich der erfindungsgemäßen Beispiele 4 und 5 zeigt sich, dass der Druckverformungsrest (Compression Set) durch Zugabe eines Covernetzers (TAIC) vermindert werden kann.

Die in den vorstehend genannten Beispielen erwähnten Additive sind in den thermoplastischen Elastomeren nicht zwingend erforderlich und dienen der besseren Verarbeitbarkeit der thermoplastischen Elastomere. Sie haben keinen wesentlichen Einfluss auf die in der vorstehenden Tabelle 1 genannten physikalischen Eigenschaften.

## Patentansprüche

1. Versetzbare Zusammensetzungen enthaltend
a) 5 bis 90 Gew.-%, bevorzugt 8 bis 85 Gew.-%, besonders bevorzugt 10 bis 80 Gew.-%, ganz besonders bevorzugt 10 bis 40 Gew.-%, insbesondere ganz besonders bevorzugt 10 bis < 30 Gew.-% mindestens eines Copolyesters als thermoplastisches Elastomer, als Komponente A, wobei der Copolyester Monomerbausteine in der Polymerhauptkette aufweist, die über Ester-Gruppen (-C(=O)-O-) verbunden sind.
b) 10 bis 95 Gew.-%, bevorzugt 14,5 bis 91,5 Gew.-%, besonders bevorzugt 19,5 bis 89,5 Gew.-%, ganz besonders bevorzugt 40 bis 89,5 Gew.-%, insbesondere ganz besonders bevorzugt > 55 bis 85 Gew.-% mindestens eines α-Olefin-Vinylacetat-Copolymeren, mit einem Vinylacetatgehalt von ≥ 40 Gew.-%, bevorzugt ≥ 50 Gew.-%, als Komponente B;
c) 0 bis 30 Gew.-%, bevorzugt 0,5 bis 28 Gew.-%, besonders bevorzugt 0,5 bis 25 Gew.-%, ganz besonders bevorzugt 0,5 bis 20 Gew.-%, insbesondere ganz besonders bevorzugt 5 bis 15 Gew.-% Füllmaterialien, Weichmacher, Additive und/oder Zusatzstoffe als Komponente C;
wobei die Summe der Komponenten A, B und C 100 Gew.-% ergibt,
und
d) 0,1 bis 15 Gewichtsteile pro 100 Gewichtsteile des α-Olefin-Vinylacetat-Copolymers (phr), bevorzugt 0,2 bis 10 phr, besonders bevorzugt 0,5 bis 7 phr mindestens eines Peroxids als radikalischen Vernetzungsinitiator als Komponente D.

2. Zusammensetzungen nach Anspruch 1, **dadurch gekennzeichnet, dass** der Copolyester in Form eines Copolymers ein Multiblock-Copolyester ist, aufgebaut aus harten Blöcken (X) basierend auf aliphatischen Diolen und aromatischen Dicarbonsäuren, verknüpft mit weichen Blöcken (Y) basierend auf
(i) mindestens einem Poly(alkylenoxid)glykol, und/oder
(ii) aliphatischen Diolen und aliphatischen Dicarbonsäuren; und/oder
(iii) einem Triblock Copolymer enthaltend einen ggf. hydrierten Polyalkadien-Block und zwei Polyalkylenoxid-Blöcke; und/oder
(iv) einem aliphatischen Carbonat und ggf. einem aliphatischen Diol und einer
aliphatischen Carbonsäure; oder einem Lacton,
wobei die Verknüpfung der Blöcke (X) und (Y) über difunktionelle Verbindungen erfolgt.

3. Zusammensetzungen nach Anspruch 2, **dadurch gekennzeichnet, dass** der Copolyester ein Multiblock-Copolyester ist, aufgebaut aus harten Blöcken (X) basierend auf aliphatischen Diolen ausgewählt aus der Gruppe bestehend aus Ethylenglykol, Dithylenglykol, Triethylenglykol, Propylenglykol, Butylenglykol, Trimethylenglykol und Cyclohexandimethanol, bevorzugt Butylenglykol, und aromatischen Dicarbonsäuren ausgewählt aus der Gruppe bestehend aus Phthalsäure, Terephthalsäure, Isophthalsäure, bevorzugt Terephthalsäure; und weichen Blöcken (Y) basierend auf mindestens einem Poly(aklylenoxid)glykol wobei das Poly(alkylenoxid)glykol aus C₂-C₁₀-Poly(alkylenoxid)glykolen, bevorzugt Poly(ethylenoxid)glykol, Poly(propylenoxid)glykol, Poly(butylenoxid)glykol, Poly(hexamethylenoxid)glykol oder Copolymeren der genannten Alkylenoxide, z.B. Copolymeren aus Ethylenoxid und Propylenoxid, aufgebaut ist.

4. Zusammensetzungen nach einem der Ansprüche 1 bis 3, **dadurch gekennzeichnet, dass** das α-Olefin-Vinylacetat-Copolymer ein Ethylen-Vinylacetat-Copolymer ist.

5. Zusammensetzungen nach einem der Ansprüche 1 bis 4, **dadurch gekennzeichnet, dass** Peroxide eingesetzt werden, die Vernetzungstemperaturen von ≥ 175°C, besonders bevorzugt 180°C, ganz besonders bevorzugt ≥ 185°C, insbesondere ganz besonders bevorzugt ≥ 190°C und weiter ganz besonders bevorzugt ≥ 200°C aufweisen.

6. Zusammensetzungen nach einem der Ansprüche 1 bis 5, **dadurch gekennzeichnet, dass** die Zusammensetzungen zusätzlich mindestens einen Covernetzer als Komponente E enthalten, der bevorzugt ausgewählt ist aus der Gruppe bestehend aus Triallylisocyanurat, N,N'-m-Phenylendimaleiimid, Triallylcyanurat, flüssigem Polybutadien, , Trimethylolpropan-N,N'-m-phenylenmaleimid, N-Methyl-N,N'-m-phenylendimaleimid, Divinylbenzol, polyfunktionellen Methacrylatmonomeren wie Ethylenglykoldimethacrylat, Diethylenglykoldimethacrylat, Polyethylenglykoldimethacrylat, Trimethylolpropantrimethacrylat und Allylmethacrylat, und polyfunktionellen Vinylmonomeren wie Vinylbutyrat und Vinylstearat, bevorzugt wird Triallylisocyanurat als Covernetzer eingesetzt.

7. Zusammensetzungen nach einem der Ansprüche 1 bis 6, **dadurch gekennzeichnet, dass** die Zusammensetzungen zusätzlich mindestens einen Verträglichkeitsvermittler als Komponente F enthalten, wobei der Verträglichkeitsvermittler bevorzugt ein Copolymer auf Basis eines α-Oletin-Vinylacetat-Copolymeren als Polymerrückgrat ist, das mit Carboxylgruppen, Carbonylgruppen, Halogenatomen, Aminogruppen, Hydroxylgruppen oder Oxazolingruppen, bevorzugt Carboxylgruppen, funktionalisiert ist, wobei der Verträglichkeitsvermittler besonders bevorzugt mittels Pfropfung von α,β-ethylenisch ungesättigten Mono- und/oder Dicarbonsäuren oder deren Derivaten auf ein α-Olefin-Vinylacetat-Copolymerrückgrat erhalten wird.

8. Verfahren zur Herstellung von Zusammensetzungen nach einem der Ansprüche 1 bis 7 durch Mischen der Komponenten A, B, C, D, E und F - soweit sie in den Zusammensetzungen vorliegen.

9. Verfahren nach Anspruch 8, **dadurch gekennzeichnet, dass** zunächst die Komponente B mit den Komponenten D und gegebenenfalls E bei Temperaturen unterhalb der höchsten Schmelz- oder Erweichungstemperatur der Komponente A gemischt werden und die erhaltene Mischung anschließend zu einer auf Temperaturen oberhalb der höchsten Schmelz- oder Erweichungstemperatur der Komponente A erhitzten Mischung der Komponente A, die gegebenenfalls die Komponente C sowie gegebenenfalls die Komponente F enthält, zugemischt wird.

10. Verfahren zur Herstellung von thermoplastischen Elastomeren umfassend die Vernetzung von Zusammensetzungen nach einem der Ansprüche 1 bis 7 oder hergestellt gemäß den Ansprüchen 8 oder 9 bei Temperaturen oberhalb der höchsten Schmelz- oder Erweichungstemperatur der Komponente A.

11. Thermoplastische Elastomere erhältlich durch Vernetzung von Zusammensetzungen gemäß einem der Ansprüche 1 bis 7.

12. Thermoplastische Elastomere enthaltend
a) 5 bis 90 Gew.-%, bevorzugt 8 bis 85 Gew.-%, besonders bevorzugt 10 bis 80 Gew.-%, ganz besonders bevorzugt 10 bis 40 Gew.-%, insbesondere ganz besonders bevorzugt 14 bis < 30 Gew.-% mindestens eines Copolyesters als thermoplastisches Elastomer, als Komponente A', wobei der Copolyester Monomerbausteine in der Polymerhauptkette aufweist, die über Ester-Gruppen (-C(=O)-O-) verbunden sind.
b) 10 bis 95 Gew.-%, bevorzugt 14,5 bis 91,5 Gew.-%, besonders bevorzugt 19,5 bis 89,5 Gew.-%, ganz besonders bevorzugt 40 bis 89,5 Gew.-%, insbesondere ganz besonders bevorzugt > 55 bis 85 Gew.-% mindestens eines α-Olefin-Vinylacetat-Copolymeren, mit einem Vinylacetatgehalt von ≥ 40 Gew.-%, bevorzugt ≥ 50 Gew.-%, das durch mindestens ein Peroxid als radikalischen Vemetzungsinitiator vernetzt ist, als Komponente B';
c) 0 bis 30 Gew.-%, bevorzugt 0,5 bis 28 Gew.-%, besonders bevorzugt 0,5 bis 25 Gew.-%, ganz besonders bevorzugt 0,5 bis 20 Gew.-%, insbesondere ganz besonders bevorzugt 5 bis 15 Gew.-% Füllmaterialien, Weichmacher, Additive und/oder Zusatzstoffe als Komponente C;
wobei die Summe der Komponenten A, B und C 100 Gew.-% ergibt.

13. Verwendung von Zusammensetzungen gemäß einem der Ansprüche 1 bis 7 zur Herstellung von thermoplastischen Elastomeren.

14. Verwendung von thermoplastischen Elastomeren gemäß Anspruch 11 oder 12 zur Herstellung von Formteilen, bevorzugt Riemen, Dichtungen, Manschetten, Schläuchen, Membranen, Dämpfern, Profilen, oder Kabelummantelungen, Schmelzklebstoffen, Folien oder zur Kunststoff-Kautschuk-Coextrusion oder zum Co-Formteil-Spritzen.

15. Formteile, Kabelummantelungen, Schmelzklebstoffe oder Folien enthaltend thermoplastische Elastomere gemäß Anspruch 11 oder 12.

## Claims

1. Crosslinkable compositions comprising
a) from 5 to 90% by weight, preferably from 8 to 85% by weight, particularly preferably from 10 to 80% by weight, very particularly preferably from 10 to 40% by weight, with very particular preference from 10 to < 30% by weight, of at least one copolyester as thermoplastic elastomer, as component A, where the copolyester has, in the main chain of the polymer, monomer units which have linkage by way of ester groups (-C(=O)-O-);
b) from 10 to 95% by weight, preferably from 14.5 to 91.5% by weight, particularly preferably from 19.5 to 89.5% by weight, very particularly preferably from 40 to 89.5% by weight, with very particular preference from > 55 to 85% by weight, of at least one α-olefin-vinyl acetate copolymer having a vinyl acetate content of ≥ 40% by weight, preferably ≥ 50% by weight, as component B;
c) from 0 to 30% by weight, preferably from 0.5 to 28% by weight, particularly preferably from 0.5 to 25% by weight, very particularly preferably from 0.5 to 20% by weight, with very particular preference from 5 to 15% by weight, of filler materials, plasticizers, additives and/or additions, as component C;
where the entirety of components A, B and C is 100% by weight,
and
d) from 0.1 to 15 parts by weight per 100 parts by weight of the α-olefin-vinyl acetate copolymer (phr), preferably from 0.2 to 10 phr, particularly preferably from 0.5 to 7 phr, of at least one peroxide as free-radical crosslinking initiator, as component D.

2. Compositions according to Claim 1, **characterized in that** the copolyester in the form of a copolymer is a multiblock copolyester composed of hard blocks (X) based on aliphatic diols and on aromatic dicarboxylic acids, linked to soft block (Y) based on
(i) at least one poly(alkylene oxide) glycol, and/or
(ii) aliphatic diols and aliphatic
dicarboxylic acids; and/or
(iii)a triblock copolymer comprising an
unhydrogenated or hydrogenated polyalkadiene block and two polyalkylene oxide blocks; and/or
(iv) an aliphatic carbonate and, if appropriate, an aliphatic diol and an aliphatic carboxylic acid; or a lactone,
where the linkage of the blocks (X) and (Y) takes place by way of difunctional compounds.

3. Compositions according to Claim 2, **characterized in that** the copolyester is a multiblock copolyester composed of hard blocks (X), based on aliphatic diols selected from the group consisting of ethylene glycol, diethylene glycol, triethylene glycol, propylene glycol, butylene glycol, trimethylene glycol and cyclohexanedimethanol, preferably butylene glycol, and on aromatic dicarboxylic acids selected from the group consisting of phthalic acid, terephthalic acid and isophthalic acid, preferably terephthalic acid; and of soft blocks (Y) based on at least one poly(alkylene oxide) glycol, where the poly(alkylene oxide) glycol is composed of C₂-C₁₀ poly(alkylene oxide) glycols, preferably poly(ethylene oxide) glycol, poly(propylene oxide) glycol, poly(butylene oxide) glycol, poly(hexamethylene oxide) glycol, or on copolymers of the alkylene oxides mentioned, e.g. on copolymers composed of ethylene oxide and of propylene oxide.

4. Compositions according to any of Claims 1 to 3, **characterized in that** the α-olefin-vinyl acetate copolymer is an ethylene-vinyl acetate copolymer.

5. Compositions according to any of Claims 1 to 4, **characterized in that** peroxides are used which have crosslinking temperatures of > 175°C, particularly preferably ≥ 180°C, very particularly preferably > 185°C, with very particular preference ≥ 190°C and more particularly preferably ≥ 200°C.

6. Compositions according to any of Claims 1 to 5, **characterized in that** the compositions also comprise at least one co-crosslinking agent as component E, preferably selected from the group consisting of triallyl isocyanurate, N,N'-m-phenylenedimaleimide, triallyl cyanurate, liquid polybutadiene, trimethylolpropane-N,N'-m-phenylenemaleimide, N-methyl-N,N'-m-phenylenedimaleimide, divinylbenzene, polyfunctional methacrylate monomers, such as ethylene glycol dimethacrylate, diethylene glycol dimethacrylate, polyethylene glycol dimethacrylate, trimethylolpropane trimethacrylate and allyl methacrylate, and polyfunctional vinyl monomers, such as vinyl butyrate and vinyl stearate, preference being given to use of triallyl isocyanurate as co-crosslinking agent.

7. Compositions according to any of Claims 1 to 6, **characterized in that** the compositions also comprise at least one compatibilizer, as component F, where the compatibilizer is preferably a copolymer based on an α-olefin-vinyl acetate copolymer as main polymer chain, functionalized with carboxy groups, carbonyl groups, halogen atoms, amino groups, hydroxy group or oxazoline groups, preferably carboxy groups, where the compatibilizer is particularly preferably obtained by means of grafting of α,β-ethylenically unsaturated mono- and/or dicarboxylic acids or their derivatives onto a main chain provided by an α-olefin-vinyl acetate copolymer.

8. Process for the preparation of compositions according to any of Claims 1 to 7 via mixing of components A, B, C, D, E and F - to the extent that they are present in the compositions.

9. Process according to Claim 8, **characterized in that** component B is first mixed with components D and, if appropriate, E at temperatures below the highest melting or softening point of component A, and the resultant mixture is then admixed with a mixture of component A which, if appropriate, comprises component C, and also, if appropriate, component F, and which has been heated to temperatures above the highest melting or softening point of component A.

10. Process for the preparation of thermoplastic elastomers encompassing the crosslinking of compositions according to any of Claims 1 to 7, or prepared according to Claim 8 or 9, at temperatures above the highest melting or softening point of component A.

11. Thermoplastic elastomers obtainable via crosslinking of compositions according to any of Claims 1 to 7.

12. Thermoplastic elastomers comprising
a) from 5 to 90% by weight, preferably from 8 to 85% by weight, particularly preferably from 10 to 80% by weight, very particularly preferably from 10 to 40% by weight, with very particular preference from 10 to < 30% by weight, of at least one copolyester as thermoplastic elastomer, as component A', where the copolyester has, in the main chain of the polymer, monomer units which have linkage by way of ester groups (-C(=O)-O-);
b) from 10 to 95% by weight, preferably from 14.5 to 91.5% by weight, particularly preferably from 19.5 to 89.5% by weight, very particularly preferably from 40 to 89.5% by weight, with very particular preference from > 55 to 85% by weight, of at least one α-olefin-vinyl acetate copolymer having a vinyl acetate content of ≥ 40% by weight, preferably ≥ 50% by weight, which has been crosslinked via at least one peroxide as free-radical crosslinking initiator as component B';
c) from 0 to 30% by weight, preferably from 0.5 to 28% by weight, particularly preferably from 0.5 to 25% by weight, very particularly preferably from 0.5 to 20% by weight, with very particular preference from 5 to 15% by weight, of filler materials, plasticizers, additives and/or additions, as component C;
where the entirety of components A, B and C is 100% by weight.

13. Use of compositions according to any of Claims 1 to 7 for the production of thermoplastic elastomers.

14. Use of thermoplastic elastomers according to Claim 11 or 12 for the production of mouldings, preferably drive belts, gaskets, sleeves, hoses, membranes, dampers, profiles, or cable sheathing, hot-melting adhesives, or foils, or for plastics-rubber coextrusion, or for co-injection-moulding.

15. Mouldings, cable sheathing, hot-melting adhesives or foils comprising thermoplastic elastomers according to Claim 11 or 12.

## Revendications

1. Compositions réticulables, contenant
a) 5 à 90% en poids, de préférence 8 à 85% en poids, de manière particulièrement préférée 10 à 80% en poids, de manière tout particulièrement préférée 10 à 40% en poids, en particulier de manière tout particulièrement préférée 10 à < 30% en poids d'au moins un copolyester comme élastomère thermoplastique, comme composant A, le copolyester présentant des éléments monomères dans la chaîne principale polymère qui sont liés via des groupes ester (-C(=O)-O-),
b) 10 à 95% en poids, de préférence 14,5 à 91,5% en poids, de manière particulièrement préférée 19,5 à 89,5% en poids, de manière tout particulièrement préférée 40 à 89,5% en poids, en particulier de manière tout particulièrement préférée > 55 à 85% en poids d'au moins un copolymère d'α-oléfine-acétate de vinyle, présentant une teneur en acétate de vinyle ≥ 40 % en poids, de préférence ≥ 50% en poids, comme composant B ;
c) 0 à 30% en poids, de préférence 0,5 à 28% en poids, de manière particulièrement préférée 0,5 à 25% en poids, de manière tout particulièrement préférée 0,5 à 20% en poids, en particulier de manière tout particulièrement préférée 5 à 15% en poids de matières de charge, de plastifiants, d'additifs et/ou d'adjuvants comme composant C ;
la somme des composants A, B et C valant 100% en poids, et
d) 0,1 à 15 parties en poids par 100 parties en poids du copolymère d'α-oléfine-acétate de vinyle (phr), de préférence 0,2 à 10 phr, de manière particulièrement préférée 0,5 à 7 phr d'au moins un peroxyde comme initiateur de réticulation par voie radicalaire comme composant D.

2. Compositions selon la revendication 1, **caractérisées en ce que** le copolyester sous forme d'un copolymère est un copolyester à blocs multiples, formé de blocs durs (X) à base de diols aliphatiques et d'acides dicarboxyliques aromatiques, liés à des blocs souples (Y) à base
(i) d'au moins un poly(oxyde d'alkylène)glycol et/ou
(ii) de diols aliphatiques et d'acides dicarboxyliques aliphatiques ; et/ou
(iii) d'un copolymère à trois blocs, contenant un bloc de polyalcadiène le cas échéant hydrogéné et deux blocs de poly(oxyde d'alkylène) ; et/ou
(iv) d'un carbonate aliphatique et le cas échéant d'un diol aliphatique et d'un acide carboxylique aliphatique ; ou d'une lactone,
la liaison des blocs (X) et (Y) ayant lieu via des composés difonctionnels.

3. Compositions selon la revendication 2, **caractérisées en ce que** le copolyester est un copolyester à blocs multiples, formé à partir de blocs durs (X) à base de diols aliphatiques choisis dans le groupe constitué par l'éthylèneglycol, le diéthylèneglycol, le triéthylèneglycol, le propylèneglycol, le butylèneglycol, le triméthylèneglycol et le cyclohexanediméthanol, de préférence le butylèneglycol, et d'acides dicarboxyliques aromatiques choisis dans le groupe constitué par l'acide phtalique, l'acide téréphtalique, l'acide isophtalique, de préférence l'acide téréphtalique ; et de blocs souples (Y) à base d'au moins un poly(oxyde d'alkylène)glycol, le poly(oxyde d'alkylène)glycol étant formé de C₂-C₁₀-poly(oxyde d'alkylène)glycols, de préférence le poly(oxyde d'éthylène)glycol, le poly(oxyde de propylène)glycol, le poly(oxyde de butylène)glycol, le poly(oxyde d'hexaméthylène)glycol ou de copolymères des oxydes d'alkylène mentionnés, par exemple les copolymères d'oxyde d'éthylène et d'oxyde de propylène.

4. Compositions selon l'une quelconque des revendications 1 à 3, **caractérisées en ce que** le copolymère d'α-oléfine-acétate de vinyle est un copolymère d'éthylène-acétate de vinyle.

5. Compositions selon l'une quelconque des revendications 1 à 4, **caractérisées en ce qu'**on utilise des peroxydes qui présentent des températures de réticulation ≥ 175°C, de manière particulièrement préférée ≥ 180°C, de manière tout particulièrement préférée ≥ 185°C, en particulier de manière tout particulièrement préférée ≥ 190°C et de manière tout particulièrement préférée encore ≥ 200°C.

6. Compositions selon l'une quelconque des revendications 1 à 5, **caractérisées en ce que** les compositions contiennent en outre au moins un coréticulant comme composant E, qui est de préférence choisi dans le groupe constitué par le triallylisocyanurate, le N,N'-m-phénylènedimaléimide, le triallylcyanurate, le polybutadiène liquide, le triméthylolpropane-N,N'-m-phénylènemaléimide, le N-méthyl-N,N'-m-phénylènedimaléimide, le divinylbenzène, les monomères de méthacrylate polyfonctionnels tels que le diméthacrylate d'éthylèneglycol, le diméthacrylate de diéthylèneglycol, le diméthacrylate de polyéthylèneglycol, le triméthacrylate de triméthylolpropane et le méthacrylate d'allyle, et les monomères de vinyle polyfonctionnels, tels que le butyrate de vinyle et le stéarate de vinyle, en utilisant de préférence le triallylisocyanurate comme coréticulant.

7. Compositions selon l'une quelconque des revendications 1 à 6, **caractérisées en ce que** les compositions contiennent en outre au moins un promoteur de compatibilité comme composant F, le promoteur de compatibilité étant de préférence un copolymère à base d'un copolymère d'α-oléfine-acétate de vinyle comme épine dorsale polymère, qui est fonctionnalisé par des groupes carboxyle, des groupes carbonyle, des atomes d'halogène, des groupes amino, des groupes hydroxy ou des groupes oxazoline, de préférence des groupes carboxyle, le promoteur de compatibilité étant de manière particulièrement préférée obtenu par greffage d'acides monocarboxyliques et/ou dicarboxyliques α,β-éthyléniquement insaturés ou leurs dérivés sur une épine dorsale en copolymère d'α-oléfine-acétate de vinyle.

8. Procédé pour la préparation de compositions selon l'une quelconque des revendications 1 à 7 par mélange des composants A, B, C, D, E et F - pour autant qu'ils soient présents dans les compositions.

9. Procédé selon la revendication 8, **caractérisé en ce qu'**on mélange d'abord le composant B avec le composant D et le cas échéant E à des températures inférieures à la température de fusion ou de ramollissement la plus élevée du composant A et on ajoute ensuite en mélangeant le mélange obtenu à un mélange du composant A, qui contient le cas échéant le composant C ainsi que le cas échéant le composant F, chauffé à des températures supérieures à la température de fusion ou de ramollissement la plus élevée du composant A.

10. Procédé pour la préparation d'élastomères thermoplastiques comprenant la réticulation de compositions selon l'une quelconque des revendications 1 à 7 ou préparées selon les revendications 8 ou 9 à des températures supérieures à la température de fusion ou de ramollissement la plus élevée du composant A.

11. Elastomères thermoplastiques pouvant être obtenus par réticulation de compositions selon l'une quelconque des revendications 1 à 7.

12. Elastomères thermoplastiques, contenant
a) 5 à 90% en poids, de préférence 8 à 85% en poids, de manière particulièrement préférée 10 à 80% en poids, de manière tout particulièrement préférée 10 à 40% en poids, en particulier de manière tout particulièrement préférée 10 à < 30% en poids d'au moins un copolyester comme élastomère thermoplastique, comme composant A', le copolyester présentant des éléments monomères dans la chaîne principale polymère qui sont liés via des groupes ester (-C(=O)-O-),
b) 10 à 95% en poids, de préférence 14,5 à 91,5% en poids, de manière particulièrement préférée 19,5 à 89,5% en poids, de manière tout particulièrement préférée 40 à 89,5% en poids, en particulier de manière tout particulièrement préférée > 55 à 85% en poids d'au moins un copolymère d'α-oléfine-acétate de vinyle, présentant une teneur en acétate de vinyle ≥ 40% en poids, de préférence ≥ 50% en poids, qui est réticulé par au moins un peroxyde comme initiateur de réticulation par voie radicalaire, comme composant B' ;
c) 0 à 30% en poids, de préférence 0,5 à 28% en poids, de manière particulièrement préférée 0,5 à 25% en poids, de manière tout particulièrement préférée 0,5 à 20% en poids, en particulier de manière tout particulièrement préférée 5 à 15% en poids de matières de charge, de plastifiants, d'additifs et/ou d'adjuvants comme composant C ;
la somme des composants A, B et C valant 100% en poids.

13. Utilisation de compositions selon l'une quelconque des revendications 1 à 7 pour la préparation d'élastomères thermoplastiques.

14. Utilisation d'élastomères thermoplastiques selon la revendication 11 ou 12 pour la préparation de pièces moulées, de préférence de courroies, de joints d'étanchéité, de manchettes, de flexibles, de membranes, d'amortisseurs, de profilés ou de gaines de câbles, d'adhésifs fusibles, de feuilles ou pour la coextrusion de matériau synthétique-caoutchouc ou pour le comoulage par injection de pièces moulées.

15. Pièces moulées, gaines de câble, adhésifs fusibles ou feuilles contenant des élastomères thermoplastiques selon la revendication 11 ou 12.
